# EUROPEAN PATENT APPLICATION

(11) **EP 2 722 751 A1**
(43) Date of publication of application: **23.04.2014**
(21) Application number: 12189490.1
(22) Date of filing: 22.10.2012
(51) Int. Cl.: G06F 9/44, G06F 3/02, G06F 3/023

(54) **Method and system for input data redirection**

(71) Applicant: ATS Group (IP Holdings) Limited, Road Town, Tortola (VG)
(72) Inventor: Bader, Thomas, 64295 Darmstadt (DE); Hartmann, Melanie, 64295 Darmstadt (DE)
(74) Representative: Börner, Robert

(57) **Abstract**

A computer implemented method, computer program product, and systems for input redirection in a decentralized computer system infrastructure: a first computer receives (4100) measurement data (181) from a visual concentration point sensor (180), wherein the measurement data (181) indicates a visual concentration point (290-1, 330) of a user (1) of the first computer (100). A user input event is received (4200) from an input device (170) of the first computer (100), wherein the user input event is inserted into an event queue of the first computer. While the visual concentration point (290-1, 330) is located on a display unit (290) of a remote second computer (200), the first computer redirects (4300) the user input event to the second computer (200). The second computer transforms (4400) the user input event in compliance with properties of the display unit (290) of the second computer and inserts (4500) the transformed user input event into an event queue (211) of the second computer (200). Finally an overlay representation (320) of the transformed user input event is displayed (4600) on the display unit of the second.

## Description

### Technical Field

The present invention generally relates to electronic data processing, and more particularly, relates to methods, computer program products and systems for input data redirection.

### Background

Input data redirection is known in the art from personal computers interfacing with multiple display units. For example, a user can move an application window towards the edges of a first monitor connected to the personal computer. As soon as the user moves the application window beyond the display area of the first monitor, the part which disappeared from the first monitor appears on a second monitor next to the first monitor. That is, the data is redirected by the personal computer from the first monitor to the second monitor for displaying.

Another scenario known in the art is redirecting input data from a client device to a central server, from where it can be distributed to other clients.

Such solutions can be improved to better support users working in a heterogeneous system environment, where many computers are networked and the users want to interact with display units of remote computers, for example, to share information of their own computers with users of other computers.

### Summary

Therefore, there is a need to improve computer systems, which are used in a decentralized computer network, to allow the user of such a system natural and easy interaction with any display unit of any remote computer of the decentralized computer network.

This problem is solved by computer systems, computer implemented methods and computer program products according to the independent claims.

In one aspect, a decentralized computer system has at least a first and a second computer. The computers are communicatively coupled through a communication network. Decentralized computer system is used herein after for a computer network where communication occurs directly between the various computers in the network. There is no central server or the like, where incoming requests of the various network computers would be centrally collected and redistributed to other computers of the network. An example of a decentralized computer system in this context is a peer-to-peer (P2P) computer network, where each computer in the network can act as a client or server for the other computers in the network, allowing shared access to various resources such as files, peripherals, and sensors without the need for a central server.

The first computer has an operating system with an event queue, which is configured to receive user input events from at least one input device. An input device can be any device which allows the user to interact with the first computer for data input purposes. Examples of input devices are mouse device, keyboards, touch or multi-touch pads, cameras, microphones or other appropriate sensors for receiving instructions from the user. A user input event is, for example, an event indicating a mouse movement or a touch event indicating a zoom request on a touch pad.

The user of the first computer may look at the display of the first computer, at the display of the second computer, or elsewhere, while operating the input device. The current point of visual interest is referred to as visual concentration point (VCP). For example, the VCP can be located on the display unit of the first computer or on the display unit of the second computer. Further, the first computer has a visual concentration point detector (VCPD), which is configured to receive measurement data from a visual concentration point sensor (VCPS). A VCPS can be any sensor which is suitable to detect, where the user of the first computer is currently looking at. Known in the art are eye-tracking sensors or head-pose sensors which can provide feedback to the first computer about the user's current point of visual interest. Such sensors are also known as "focus of attention" sensors. The respective measurement data of the VCPS are forwarded to VCPD. Based on the measurement data the VCPD can then detect the visual concentration point (VCP) of the user. For example, the user may be an operator in a command and control center where many operators work on their personal workplace computers to overlook a specific part of a factory, traffic network, city area or the like. Most of the time the user may be focused on display units of his/her personal workplace units. However, there may be an incident or a presentation of something of interest on another workplace computer of another user or on a large screen shared by multiple users. This incident may now attract the user's attention and the user may want to contribute information of his/her own first computer to the information shown on the display of another computer of the decentralized computer system. Under such circumstances the VCPD detects that the user now is looking at another display unit of a second computer. That is, the focus of attention or the VCP of the user has changed from a display unit of the first computer to a display unit of a second computer. The VCPD is configured to identify the display unit of the second computer (e.g., by associating a corresponding ID number with the display unit of the second computer).

The first computer further has a redirection component, which is configured to redirect the user input events to the remote second computer, while the VCP is located on the display unit of the second computer. That is, once the VCPD detects that the user is looking at the display unit of a computer, which is not the user's workplace (first) computer, the redirection component extracts the user input events from the event queue of the operating system of the first computer. The extraction may start at the time when the detection occurs. It can also start with a delay regarding the detection time point. For example, a delay may be implemented as a pre-defined time interval after the detection time point. This increases the probability that the detected VCP remains stable during a certain period and avoids a reaction of the system caused by a short accidental change of the user's focus of attention. Any other filter, which is suitable to avoid accidental detection in the VCPD can be used instead. The extracted user input events correspond to user input events caused by the user after the VCP has changed towards the display unit of the second computer. Therefore, the interaction of the user with the input device of the first computer is now in relation to what the user actually sees on the display unit of the second computer. The redirection component transmits the extracted user input events to the second computer over the communication network by using an appropriate network interface.

The second computer is now receiving those user input events through an appropriate interface component from the first computer. The second computer has a transformer component, which is configured to transform the user input events in compliance with properties of the display unit of the second computer. The transformation may take into account display characteristics of the display unit, such as the resolution of the display, possible subsections of the display or the like.

The second computer has its own (further) operating system with a respective (further) event queue. The transformed events are then inserted into the further event queue of the second computer. Once the transformed user input events are inserted in the event queue corresponding overlay representations are displayed on the display unit of the second computer.

As a consequence there is no need for a user to explicitly give commands or instructions to the first computer system in order to interact with a remote display. The VCPD automatically recognizes the intent of the user to interact with a remote display and identifies the respective device within the decentralized computer system network. Any computer of the network can be a target device for the first computer for input redirection. The user can now observe the interaction with the second computer on the remote display while still interacting with his/her input device of the first computer. Any change of the visual concentration point to a further remote display unit of a further computer results in an input redirection to the further computer. That is, the user still makes use of the input device(s) of the first computer but the user input events are now transmitted to the further computer for being transformed in line with the properties of the further display unit and finally inserted into the event queue of the further computer. Therefore, the user simply needs to look at the respective target device for interaction and can easily continue to use his/her own user interface devices.

In another embodiment, the first computer system is communicatively coupled with a camera. The camera can provide camera data, such as pictures or a video stream, to the input redirection component. For example, in the case of using a touch pad or a multi-touch input board as user input device the camera may be directed at the input device and provide camera data of the user's hand interacting with the input device to the redirection component. That is, the camera can provide camera data which is associated with the respective user input events.

The first computer system can now transmit the camera data to the second computer system while the visual concentration point (VCP) of the user is located on the remote display unit. That is, the camera data is transmitted to the remote system together with the respective associated user input events. The second computer system receives the camera data and can merge the camera data with the overlay representation on the display unit. The camera data can be used to provide valuable visual feedback to the user when looking at the remote display unit but still interacting with the own input devices. For example, in the case of using touch input devices it can be of significant help to the user to see his/her own hand when interacting with the input device while actually looking in different direction towards the remote display unit. By providing the visual feedback with the overlay representation the user does not need to interact "blindly" with the input device but can still watch his/her hand movements or other representations of the interaction with a respective input device.

In yet another embodiment, the first computer system can identify an interaction context, wherein the interaction context is associated with the user input event. The interaction context can include additional information parameters like the distance of the user from the display unit or the angle of observation may have impact on the transformation as well. Such information can be provided by the VCPD when detecting the VCP of the user. The interaction context can also include information about an application context running on the first computer system. This application context may be relevant for an application running on the second computer. Therefore, there can be need to transmit this kind of information to the second computer system. Further examples of interaction context are given in the detailed description.

While the VCP is located on the display unit of the second computer the interaction context of the first computer is now also redirected to the second computer together with the associated user input event. The second computer now receives this interaction context and can use the interaction context, for example, for transforming the user input event. It can also be used to be associated with the overlay representation of the transformed user input event. That is, a visual representation of the interaction context can be merged into the overlay representation. The interaction context can also be directly merged into an application running on the second computer system. Examples of various interaction contexts are given in the detailed description.

It may be desirable that any computer device in the network can act as a target device for remote interaction but also as a source device for redirecting user input events from user's workplace computer. In this aspect, a computer of the decentralized computer system network combines the functions of the first computer and the remote second computer. That is, it can be the source computer for receiving input events from its user and redirect such user input events to another remote computer in the network. It can also be the target computer for another remote computer from which it receives user input events because another user is looking at the display unit of the computer. To enable interaction of its own display unit with the other user, the respective user input event transformation is performed by the computer. On the computer only one event queue, namely the event queue of the computer's operating system is needed. The transformer inserts the transformed user input events of another remote computer into the same event queue as from where it extracts the user input events from its own user for input redirection.

In a further aspect, computer program products are provided to enable the described computer implemented methods and computer systems in a decentralized computer system network when being executed on the respective computers.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 is a simplified block diagram of a decentralized computer system with a source computer and a target computer according to one embodiment of the invention;
FIG. 2 is a simplified block diagram of a computer according to one embodiment of the invention, which enables input redirection in a decentralized computer network;
FIG. 3 is a simplified flow chart of a computer implemented method according to an embodiment of the invention;
FIG. 4 shows a workplace computer with a touch input device according to an embodiment of the invention;
FIG. 5 shows an application scenario of an embodiment of the invention in a command and control center with multiple computers in a decentralized computer network;
FIG. 6 is a sequence diagram illustrating switching from normal operation mode to input redirection mode according to an embodiment of the invention; and
FIG. 7 is a process chart with examples for information transfer from the source computer to the target computer 200 according to an embodiment of the invention.

### Detailed Description

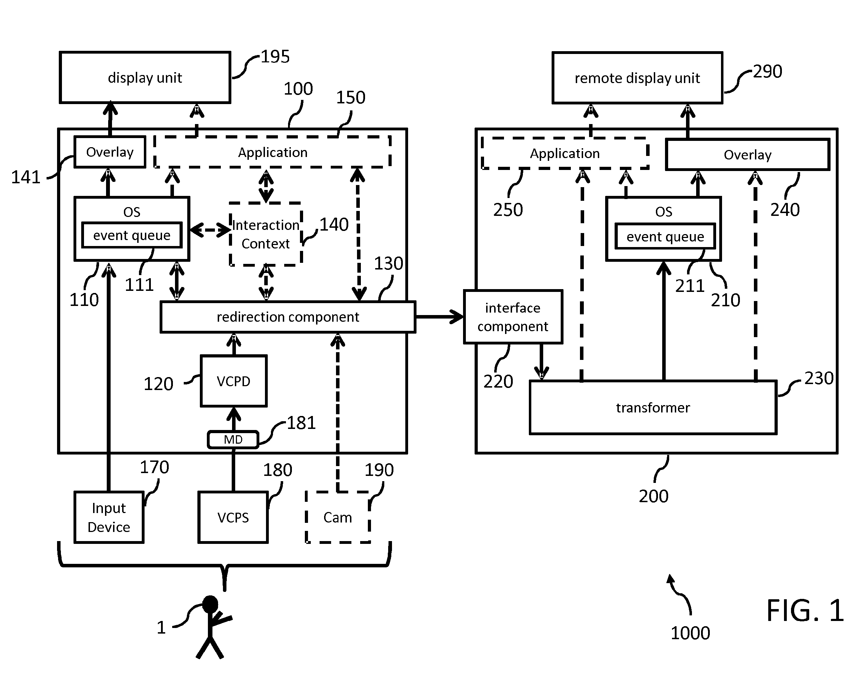

FIG. 1 is a simplified block diagram of a decentralized computer system 1000 with a source computer 100 and a target computer 200 according to one embodiment of the invention. The decentralized computer system may include any number of computers, which are all networked through an appropriate communication network.

The source computer 100 will be referred to as first computer and the target computer 200 will be referred to as second computer.

The first computer 100 has at least one input device 170, which can be used by a user 1 of the first computer to interact with the first computer. Such an input device can be a mouse, trackball, touch pad, keyboard or any other appropriate device allowing the user to input data or instructions. An interaction of the user 1 with the input device 170 may create one or more user input events. For example, such an input event can be mouse(x,y) indicating that the user has placed the mouse cursor at coordinates (x,y) on display unit 195 of the first computer 100. When the user selects an object (e.g., by clicking), respective user input events may be raised (mouse.left.click or mouse.right.click).

The user input events generated by the input device 170 are moved into the event queue 111 of the operating system (OS) 110 of the first computer. Typically, the event queue 111 is operated in a first-in-first-out (FIFO) mode. That is, the user input events are fed into the queue in the order they arrive at the queue and are processed by the operating system 110 in the same order as they arrive. In normal operation overlay representations 141 of the user input events in the event queue 111 can be displayed on the display unit 195 of the user's workplace computer 100. The user input events may also directly affect the display of an application 150 running on the workplace computer 100.

The first computer 100 further has an interface to receive measurement data (MD) 181 from at least one visual concentration point sensor 180. Examples of such visual concentration point sensors are eye tracking sensors, head pose sensors. Such sensors may be in the form of webcams or specific eye tracking cameras. MD 181 is received by a visual concentration point detector VCPD of the first computer. The VCPD can analyze MD 181 to detect the visual concentration point VCP of the user 1. VCPDs are commercially available. Examples of commercially available VCPDs are face and eye tracking modules of faceAPI or face LAB from Seeing Machines Inc located in Tucson, USA, or tracking solutions from Tobii Technology AB located in Danderyd, Sweden.

The VCPD can detect the VCP of the user. That is, it can resolve where the user is currently looking at. In normal operation the user 1 is likely to look at display unit(s) 195 of his/her workplace computer 100. Under specific circumstances the user's attention may be grabbed by another display unit 290 of a remote computer in the decentralized computer system. For example, something interesting is shown on the remote display unit 290 of the second computer 200. Once the user 1 starts looking at the remote display 290, the VCPD can calculate based on MD 181 that the user's VCP is now resting on the remote display 290. For example, the calculation can be based on a 3D model of the environment hosting the decentralized computer network. The 3D model may provide information which allows determining the distance of the user 1 from the remote display unit 290 and a transformation from the VCPS coordinate system to the coordinate system of the remote display unit. As a result of the calculation the VCPD can determine anyone of the following parameters: an identification number (ID) of the remote display unit 290 and the associated remote second computer 200; the location of the user's VCP on the remote display unit 290 in normalized coordinates; the distance of the user to the screen (e.g., the remote display); the viewing angle between the user's view direction and the display units display plane; and the type of the VCPS 180.

Once the VCPD recognizes at a specific point in time that the user's VCP has changed towards the remote display unit 290 of the second computer 200, the redirection component 130 can redirect the user input events, which arrive in the event queue 111 after the specific point in time, to the remote second computer 200. The input redirection may be ongoing while the VCP is located on the display unit 290. The redirection includes the extraction of the respective user input events from the event queue 111 and the subsequent transmission of the extracted user input events to the remote second computer 200. Further, before the transmission to the second computer 200 the redirection component may adjust the extracted user input events based on parameters determined by the VCPD on the basis of the measurement data 181. A detailed example for such an adjustment is discussed later. The redirection component 130 can have its own external interface to communicate with other computers in the network or may use any appropriate network interface of the first computer 100 to transmit the user input events via the network. Further, the redirection component 130 can send the parameters provided by the VCPD to the second computer 200.

The second computer 200 has an interface component 220, which provides the interface to the decentralized computer system network to receive the user input events from the first computer 100. A transformer 230 of the second computer 200 is configured to transform the user input events in compliance with properties of the display unit 290 of the second computer 200. This may also take into account the parameters provided by the VCPD 120, the interaction context and properties of the input device of the first computer (e.g., resolution). The result of the transformation is transformed user input events, which have an appropriate format to be handled by the (further) operating system 210 of the second computer 200. For example, the transformed user input events may include the ID of the respective display unit and may already be normalized in view of the remote display unit's properties. In one embodiment the transformer may transform touch events into mouse events in case the second computer cannot handle touch events in the event queue. In another embodiment, the transformer may associate the information about the VCPS type to decide that the quality of sensor data originating from a sensor of this type (e.g., a nose detection sensor) is too low to be used directly as user input events for the queue insertion. In such an embodiment the use of the calculated display coordinates could lead to heavy jiggling of a respective overlay representation on the display unit. The transformer may therefore decide to not using the calculated coordinates and rather transform the user input events based on a rough assessment of the coordinates. For example, this may lead to the selection of an open window on display 290.

The transformer can forward the transformed user input events to the (further) event queue 211 of the further operating system 210 to be inserted in the further event queue 211. Once the transformed user input events are inserted in the further event queue, the operating system 210 of the second computer can process a transformed user input event if it can be interpreted by the OS 210 and display an overlay representation 240 of the transformed user input event. For example, a mouse pointer which corresponds to the user's 1 mouse input device 170 may be shown as an overlay representation 240 on the remote display unit 290.

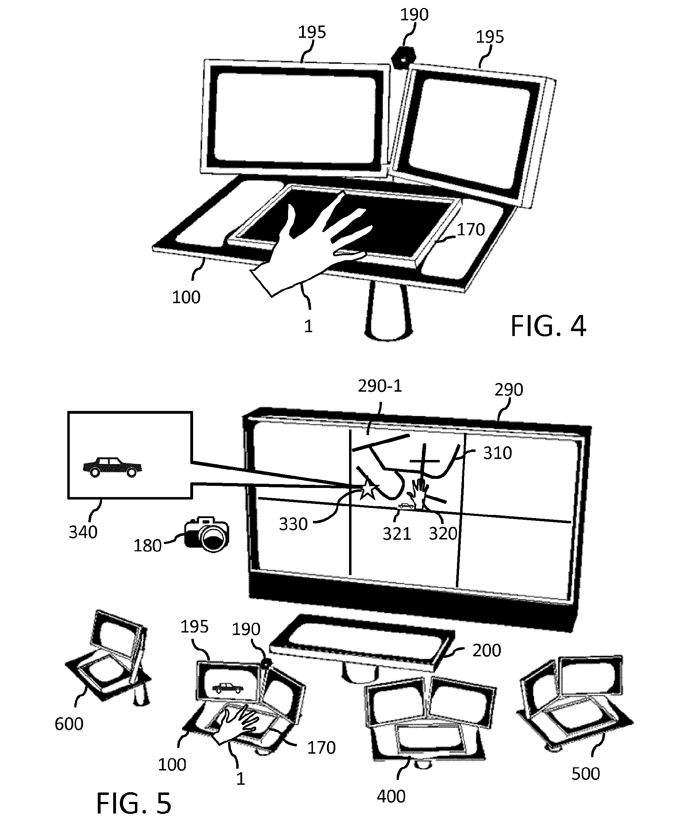

In one embodiment, the user's workplace computer 100 may have multiple local displays 195 (see also FIG. 4). In such a setup the VCPD may detect that the user's VCP moves from a first local display to a second local display. In this embodiment, the input redirection component may initiate reinsertion of the previously extracted user input events into the event queue 111 instead of transmitting the user input events to a remote computer. The respective overlay representations 141 of the reinserted user input events can then be displayed on a local display 195 of the workplace computer. The reinserted user input events may be transformed before reinsertion in a similar way as they are transformed in the embodiment using the remote display. Instead of transforming in compliance with the display properties of the remote display, in the local display embodiment, the display properties of the local display unit 195 can be used.

In one embodiment the first computer system may be communicatively coupled with a camera 190. The camera 190 may be a standard digital camera for taking pictures and/or recording video data. The camera can send its camera data to the redirection component 130 of the first computer. The camera data can be associated with a user input event. For example, in case the input device 170 is a touch interface, where the user performs certain gestures with his/her hand, the camera may be directed on the user's hand and send a real time video showing the user's hand movements while interacting with the touch interface and generating respective user input events. In other words, the camera data is associated with the user input events in the time dimension. Instead of sending the full camera picture, standard image processing techniques may be used to cut out the relevant camera data, e.g., the user's hand; and discard the remaining pixels related to the background of the hand. Transmitting only the relevant camera data can save bandwidth in the communication between the computers of the decentralized computer system.

The redirection component can now transmit the (relevant) camera data together with the associated user input events to the second computer 200. This redirection of camera data may occur continuously while the visual concentration point (VCP) of the user is located on the display unit of the second computer. Redirection in this context is equivalent to the transmission of the received camera data to the second computer. On the second computer the received camera data can then be merged with the overlay representation on the display unit 290. The camera data may be routed through the transformer 230 to the overlay 240. The overlay 240 typically is a specific portion of the video memory of the second computer. Alternatively, the camera data may be sent to the overlay 240 directly from the interface component 220. In the case of the camera data including the cut-out user hand, such data can be merged into the overlay. Without the camera data the user would only see representations of the respective touch user input events (e.g., five spots corresponding to the locations where the user's fingers touch on the touch pad). With the camera data being merged into the overlay 240 the user can now see in addition his/her own hand as a video on the remote display unit and receive valuable feedback with regards to how to move the hand on the touch input device 170 of the first computer for achieving an intended interaction with the second computer. The user can therefore interact with the input device in a more controlled manner while keeping the VCP on the remote display unit.

In the local display embodiment, where user input events are reinserted into the event queue 111 of the workplace computer, the camera data may be merged into the overlay 141 of the workplace computer.

In one embodiment the redirection component 130 may further receive input from an interaction context 140 of the first computer 100. The interaction context can be determined by an application 150 running on the first computer. The interaction context 140 may further be influenced by user input events from the event queue. For example, the interaction context 140 may correspond to a video, which is currently running on the first computer. It may also be any other application specific object in the context of the application 150, such as a file, a table, a picture, a graph, a button or the like. The interaction context can indicate that the user, while having the VCP on a display of the first computer 100, is selecting a specific application object (e.g., by clicking on a certain file icon). In this case, the intention of the user may be to move the object (e.g., the respective file) to a second application 250, which is running on the second computer 200. Once the VCPD detects a change of the user's VCP towards the remote display unit 290, all coming user input events will be redirected to the second computer. The interaction context 140 will now also be redirected to the second computer. On the second computer the transformer may use the interaction context to transform the received user input events. For example, in case the interaction context includes a file, which was selected by the user on the first computer, the first computer continuously transmits the respective user input events to the second computer. In other words, during all the time the user touches on the input device to maintain the selection, the input device is generating user input events which are inserted into the event queue of the first computer. All the respective user input events, which are generated while the user is looking at the remote display of the second computer, are sent to the second computer. However, in the context of a selected file as interaction context, for the second computer it is not interesting that the user is generating touch events all the time. For the second computer it is interesting to know when the selected file should be dropped on the remote display unit. This may be the case when the user actually stops touching the input device of the first computer in order to indicate that the file should be dropped on the remote display unit at the current position. Therefore, the transformer may suppress all received user input touch events indicating the file selection until the user stops touching the input device. Instead of inserting all received touch events into the event queue of the second computer, the transformer may transform the respective user input events into a drop event for the second computer. In the example, only the transformed drop event may be finally inserted into the event queue of the second computer. The received interaction context may also be merged with the overlay representation of the transformed user input event. For example, in the case of the selected graph object a respective icon can be added to the overlay. The icon can be associated with the user's hand (or the mouse cursor) as long as the user does not indicate through a corresponding user input event, that the object should be dropped. In other words, the icon may be attached to the graphical representation of the user's hand and be moved in sync with the hand movement. The user may then initiate a further user input event on the input device 170 (e.g., by clicking a mouse, touching on a touch pad or simply by releasing the touchpad). The respective transformed user input event on the second computer may then trigger that the user context is directly inserted into the second application 250 running on the second computer. For example, the respective graph may be dropped at the location on the remote display where the user was pointing at when initiating the further user input event. If the object is dropped into the second application 250, the second application needs to know how to handle the dropped object. Besides standard drag and drop functionality the applications may have further event handlers for interpreting the interaction context data. For example, a video or a picture file having metadata, which includes location information about where the video or picture was taken, may be placed automatically on a map at the respective location. For that purpose a respective event handler can interpret the metadata of the file and transform the received user input events accordingly.

Allowing the transfer of interaction context from the first computer to the second computer enables the system to allow the user of the first computer a real interaction with applications running on the second computer. Not only graphical representations of user input events can be displayed on the remote display but also application objects of applications running on the user's primary workplace (first computer) can be provided to applications on the second computer by using the flexible concentration based input redirection. This requires a compatibility of the application objects with the target application on the remote second computer. This interaction scheme allows any user of any computer in the decentralized computer system network to share information from his/her personal workplace with any other user on the respective users' remote display units.

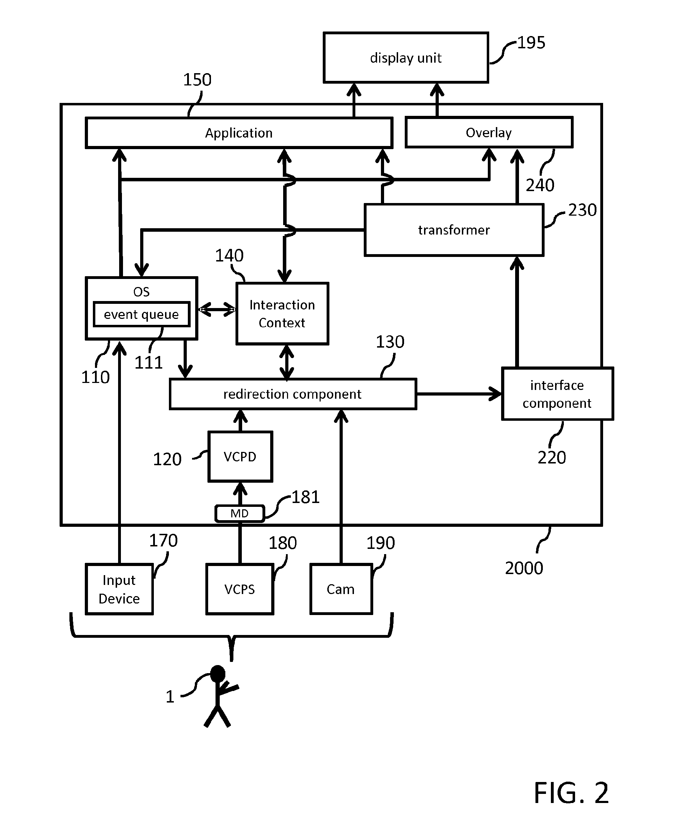

FIG. 2 is a simplified block diagram of a computer 2000 according to one embodiment of the invention, which enables input redirection in a decentralized computer network. The computer 2000 basically includes the components of the first and second computers (cf. FIG. 1, computers 100, 200) described under FIG. 1 in a single computer. By using the components, which are described for the second computer 200 the computer 2000 can act as a remote computer for another computer in the network and provide the display unit 195 as a remote display unit for other users of other computers. By using the components which are described for the first computer 100, the computer 2000 can act as the enabler for its user to interact with another remote computer while still using the input device 170 as the input device for capturing user input events. The computer 2000 has only one operating system 110 with a respective event queue 111. Depending on the performed function of the computer, either the transformed user input events are inserted into the event queue 111 or the user input events received from the input device 170 are extracted for input redirection from the same event queue 111.

The functions of the computer 2000 can easily be derived by a person skilled in the art from the description of the first and second computers under FIG.1.

The computer 2000 is configured in a way that it can be placed in any decentralized computer system network to support visual concentration based remote interaction for users of computers in the network. In this embodiment, the user can also retrieve information from a remote display of a remote computer and move it to his/her own workplace computer 2000. This is possible because the computer 2000 can equally serve as a target for a remote computer. It is to be noted that in this embodiment the user is continuously using the input device 170. As long as the computer 2000 is operated in the input redirection mode the user can select objects on the remote display unit. The remote computer may capture the respective interaction context which is transmitted to the computer 2000 when switching back to normal operation mode because the user's VCP is changing back to display unit 195.

The computer 2000 can also be operated according to the local display embodiment described under FIG. 1. In case the user stares at a local display unit 195, the VCPD 120 may detect a respective VCP, which does not require redirection of the user input events to a remote computer, but instead requires reinsertion of the user input events into the event queue 111 of the computer 2000. In this case, the redirection component can route the user input events to the transformer 230 of the computer 2000. This may occur via a direct interface to the transformer or by using the interface component 220. In this embodiment, the transformer 230 transforms the user input events in compliance with the properties of the local display unit 195 before the transformed user input events are reinserted into the event queue 111. The display of the respective overlay representations of the user input events on the local display unit is performed in the same way as if user input events had been received from a remote computer. In this embodiment, also camera data from camera 190 can be routed to the local display 195 while the user is looking at it. this is achieved by merging the camera data into the overlay 240 of the computer 2000.

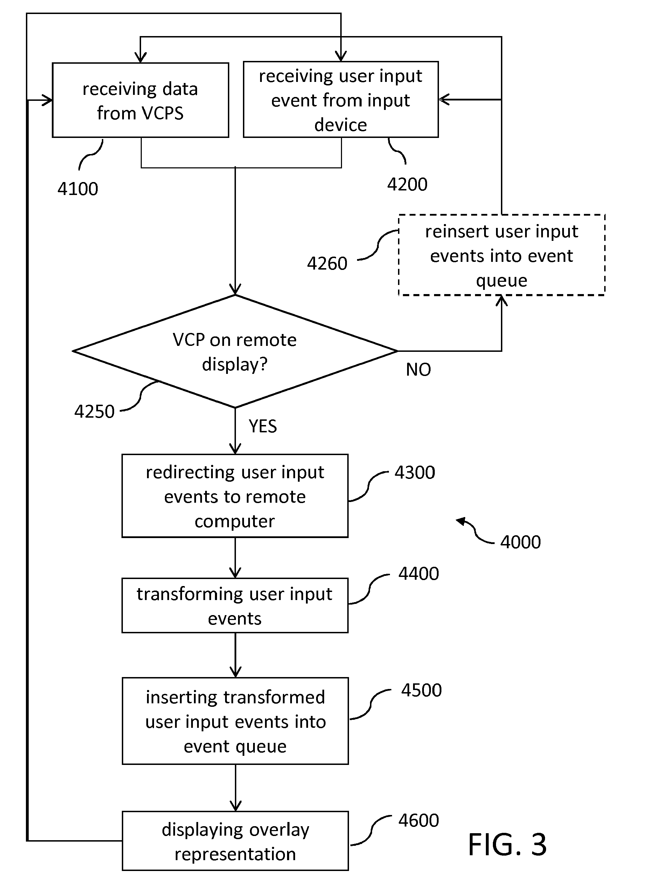

FIG. 3 is a simplified flow chart of a computer implemented method 4000 for input redirection in a decentralized computer system infrastructure according to an embodiment of the invention.

A first computer, which is the current workplace of a user, is continuously receiving 4100 measurement data from a visual concentration point sensor VCPS. The measurement data (cf. FIG. 1, data 181) indicate a visual concentration point of the user. The visual concentration point is the point where the user is currently looking at. In normal operation mode the visual concentration point is located on a display unit of the first computer and the user is typically interacting with an input device of the first computer to control an application running on the first computer and being displayed on a display unit of the first computer.

During such interaction the first computer receives 4200 a user input event from the input device. The user input event is inserted into the event queue of the operating system of the first computer. As long as the VCP of the user stays on a display unit of the first computer nothing changes and the user simply interacts with the first computer via respective Input/Output (I/O) means.

Based on the VCPS measurement data the VCPD can detect 4250 whether the user is still looking at the display unit of the first computer or whether the user's focus of attention or visual concentration point has changed towards a remote display device of another computer. When the first computer recognizes, e.g., by using the VCPS and VCPD means described earlier, that the VCP of the user changes towards a remote display unit of a remote second computer, the first computer starts to redirect 4300 user input events to the second computer as long as the user is looking at the remote display unit of the second computer. For this purpose the first computer may extract the user input event from the event queue of the first computer and adjust the extracted user input event based on parameters determined by the VCPD on the basis of the measurement data from at least one visual concentration point sensor. The adjusted user input event is then transmitted to the second computer.

The second computer transforms the received user input event and transforms 4400 it in compliance with properties of the display unit of the second computer. The transformation may include the calculation of the concrete coordinates on the second display or whether input events should be suppressed or transformed. For example, in case the second computer is not able to interpret touch events, the transformer may need to transform the respective user input events into mouse events.

The transformed user input event is then inserted 4500 into the event queue of the operating system of the second computer. If this operating system is able to handle the inserted transformed user input event a respective overlay representation of the transformed user input event is displayed on the display unit of the second computer.

In the local display embodiment the VCPD does not detect the user's VCP on a remote display but on a local display. In this case (NO) the user input events may stay in the event queue or may be transformed according to the display properties of the local display as described under FIG. 2 and can then be reinserted 4260 into the event queue of the user's workplace computer for displaying the respective overlay representations on the local display unit. Alternatively, for this case (NO), the input events can also stay in the event queue without the need for re-insertion. The VCPD may also implement filter functions to identify which events can be directly reinserted into the event queue and which events need to be adjusted before reinsertion.

FIG. 4 shows a workplace computer 100 with a touch input device 170 according to an embodiment of the invention. The workplace computer 100 is further equipped with two display units 195 and a camera 190. The camera 190 may be directed towards the touch input device 170. The touch input device may be a classic touch pad or a multi-touch interface. The user's 1 hand can operate the workplace computer by interacting with the touch input device 170. For example, when the user touches the touch input device a respective user input event is generated which is inserted into the event queue by the operating system of the workplace computer 100.

In parallel, the workplace computer can receive camera data from the camera 190. The camera data can be a series of pictures or a video stream showing the touch input device and the user's hand moving and interacting with the input device. For example, the user may touch the input device 170 to select a specific application object shown on any display unit 195 of the workplace computer. The respective application is running on the workplace computer 100 and a respective user input event is generated. The camera data may provide a video stream to the first computer showing the hand movement before, while and after the generation of the user input event. That is, the workplace computer can associate the camera data with the user input event. The association may be based on the elapsed time. In other words, each frame of the video stream may have a time stamp and the user input event also may have a time stamp. If the clocks for creating the time stamps are in sync, then the user input event can simply be associated with the respective video frame by comparing the time stamps. The association may also be based on standard image processing technology, where the touch event is recognized in the video stream the respective frame is flagged accordingly. The camera data can also be reduced via image processing to specific characteristics of the recorded frames. For example, only the cut-out hand may be used for further processing thus saving bandwidth and memory.

In normal operation, the workplace computer 100 may not show the received video stream on its display unit 195 or it may only be shown in a non-disturbing manner. While the user is operating with his/her workplace computer, normally the visual feedback of the camera may not be needed because the association between the user's hand and display is clearly visible for the user. Still, while the user is looking at one of the local display units 195, the workplace may be operated according to the local display embodiment, where user input events are reinserted into the event queue of the workplace computer and respective overlay representations are shown on the local display unit with the VCP.

When the user's VCP changes towards the remote display unit in the decentralized computer system network, the display units 195 of the workplace computer may be disabled or greyed out. Any other feature can be used which is appropriate to indicate that the display is currently inactive with respect to the interaction with the user. The workplace computer 100 starts input redirection to the remote computer associated with the remote display unit in response to the new VCP of the user. In parallel it can transmit the camera data to the remote computer, while the VCP of the user is located on the remote display unit.

The remote computer can then merge the camera data with the overlay representation of the respective transformed user input event and display both on the remote display, as described earlier. The association between the camera data (e.g., video stream) and the user input events can be used to establish a synchronized merge operation on the remote computer. In other words, the merged camera data showing hand movements of the user on the remote display unit will match the display of the respective user input event overlay representation in the time dimension. That is, at the point in time the user touches the input device 170 the remote display unit will show the associated camera data. There can be a small delay in the visual feedback, which may be due to network latencies and the described processing steps of the input redirection method. However, the delay does not seriously affect the real-time visual feedback for the user with regards to the interaction with the input device 170. The user will have a similar experience when looking at the remote display unit as when operating his/her own workplace computer, because, although looking into a completely different direction, the user's hand is still in the user's field of view in the form of the displayed camera data. This makes the interaction of the user with the input device 170 less error prone and more accurate compared to blind interaction with the input device while having the VCP located on the remote display unit.

FIG. 5 shows an application scenario of an embodiment of the invention in a command and control center with multiple computers 100, 200, 400, 500, 600 in a decentralized computer network. For example, the computers can be computers, which are configured as described under FIG. 2.

User 1 is operating the first computer 100, which may correspond to the user's workplace computer described under FIG. 4. In the example, a tracking application is executed on the first computer 100 and a corresponding video, which is displaying a tracked car, is displayed on the left display unit 195 of the first computer 100. The user 1 can use the touch input device 170 to adjust the display by performing corresponding actions, such as for example, a gesture indicating a "zoom" action, a "center target" action or the like. User input events corresponding to the touch interactions are sent to the event queue of the first computer and affect the display output of the computer on the display 195. The user is observed by a visual concentration point sensor VCPS 180. For example, a suitable camera can be used that monitors the eyes of the user or tracks any other characteristics representative for the user's focus of attention. The camera is communicatively coupled with the visual concentration point detector VCPD of the first computer 100 as described under FIG. 1 and provides measurement data concerning the user's current visual concentration point VCP. As long as the user's focus of attention is directed to the workplace display unit 195, the camera data are simply evaluated by the VCPD but no change in the behavior of the first computer occurs.

In the example, a large remote display unit 290, which is the display unit of the remote computer 200, is used to show information of general interest to all users of the computers 100, 400, 500, 600. In the example, the remote display unit 290 is divided into multiple subsections. The various subsections (e.g., subsection 290-1) can show different applications. In the example, in subsection 290-1 a city map 310 is displayed. The city map 310 may be part of an application, where certain events or incidents, which occur in a respective part of the city, can be notified to the users of the decentralized computer network. The star 330 indicates an incident at the respective city location. Such an incident may be a fire, a bank robbery a traffic accident or the like. For the example scenario a bank robbery is assumed, which has just been notified at the location corresponding to the star 330.

Assuming that the incident grabs the user's 1 attention and the user starts staring at the star 330 the VCPS 180 will provide measurement data to the VCPD of the first computer 100, which allow the VCPD to detect that the user's 1 VCP is now at the screen position of star 330 of the remote display unit 290. The first computer changes into the input redirection mode, which has been described in detail before, and starts to redirect user input events to the remote second computer 200. Assuming that the user recognizes that the location of the incident corresponds to an area which is observed by surveillance cameras under the user's control, the user may come to the conclusion that the video stream provided by such a surveillance camera may be of general interest also for other users of other workplaces. The user 1 may therefore want to share the respective video stream with the other users.

For achieving this, the user 1 may focus again on the display unit 195 of the workplace computer 100 to look at the video provided by the respective surveillance camera. Once the VCPD detects that the user's VCP is again on display unit 195, the input redirection mode is stopped and the workplace computer 100 goes back to the normal local operation mode (e.g., the local display embodiment). In the example the user discovers a suspicious car, which is parking close to the bank currently being robbed. The user may zoom into the video to enlarge the respective car. When the car is displayed at the desired size the user can select the video (e.g., by touching on the video using the touch input device 170). The information that the user has selected the video can now be captured in the interaction context of the workplace computer 100. The interaction context can be stored in a respective memory portion of the workplace computer 100 in an appropriate data structure. For example, such a data structure may include a data portion storing an absolute link to the video source. Such a link can then be interpreted by any other computer. A further data portion of the data structure may include a screen shot of the video at the time point of selection. The screen shot may also be compressed into a thumbnail icon. If the remote target computer can interpret the link, the respective video stream can be shown. Otherwise, only the screen shot may be shown.

The user may now focus again on the remote display unit 290 at the location of the star 330. The VCPS 180 provides the corresponding measurement data of the user's VCP to the VCPD. In the example the received measurement data indicate the user's VCP coordinates (200, 50). The VCPD of the workplace computer may store a data structure reflecting a 3D model of the room where the computers of the decentralized computer network are located. Any other configuration that allows calculating the observed remote display from the user's position and gazing direction can be used. For example, by using the data structure with the 3D representation of the user's environment the VCPD can detect that the user 1 is now looking at the remote display unit 290. The VCPS provides a three dimensional vector in space, which is defined by the gaze origin (e.g., the midpoint between the user's eyes or the center of the user's head) and the gaze direction. By using an appropriate data structure storing the information about which display units are located in the gaze direction, the VCPD can calculate the three dimensional VCP and determine at which display the user is currently looking at. Further taking into account the distance of the user to the determined display as well as the gaze angle under which the user is looking at the display, the VCPD can calculate a relative two dimensional VDP on the determined remote display unit. In other words, the information that the remote display unit 290 belongs to the remote computer 200 can be stored in mapping structure at the workplace computer 100. It can also be implicit information stored in the 3D model data structure. Depending on the accuracy of the VCP measurement data the VCPD may even detect that the user is looking at relative position (20, 20) of the remote display unit 290, which corresponds to position of the star 330. The coordinates (20, 20) can be relative coordinates in relation to the size of the remote display. For example, an assumption may be that each display has a size of (100, 100), which is independent of the actual resolution and size. That is, the VCPD can identify the remote display corresponding to the user's VCP and the associated remote computer. It can further calculate the VCP coordinates in relation to the remote display based on the 3D model data structure. The calculated relative coordinates may be used as the start position for the input redirection. Once further user input events are generated, the coordinates can be changed in relation to the start position in accordance with the user input events received by the remote computer.

Once the VCPD detects the new target system of the user, the workplace computer 100 of the user switches again into the input redirection mode and stays in this mode as long as the user's VCP rests on the remote display 290. While the workplace computer 100 is in the input redirection mode all user input events generated through the input device 170 are redirected to the remote computer 200. Further, the camera data of camera 190 and the interaction context from the workplace computer is also redirected to the remote computer 200. The VCP coordinates can be part of the interaction context or can be sent separately to the remote computer.

Once the remote computer 200 receives the VCP coordinates (20, 20), the transformer of the remote computer can transform the coordinates into coordinates corresponding to the properties of the remote display unit 290. For example, if the remote display 290 has a real resolution of 1024x768 pixels, the remote computer 200 can calculate that the user is currently staring at (205, 154). This can be calculated by a simple rule of proportion.

For example, if the user selects the video (e.g., by touching the input device accordingly) and turns his attention towards the remote display, the overlay image of the user's hand can be shown at the point the user's eye first rests upon (starting point). The user can then adjust the position by moving his finger on the touchpad, which in turn adjusts the position of the overlay image relative to the starting point. The relative movement can thereby also be adapted to the user's distance to the screen; the farer the user is located away from the screen, the higher may be the relative change in position. Also the scale of the overlay, that is, the size to which the overlay picture is scaled, can be adapted to the user's distance from the screen. The transformed user input events are then inserted into the event queue of the operating system of the remote computer and a respective overlay representation can be displayed on the remote display 290 at the respective coordinates. For example, overlay representations of the user input events can be colored circles or cross signs or other appropriate shapes indicating the contact area of the user's fingers on the touch input device. If the input device is a mouse or trackball device, a typical mouse pointer arrow may be used as overlay representation, whereby the size may be adjusted in relation to the remote display size and resolution.

In addition the remote computer 200 can now merge the received camera data with the overlay representations of the user input events (not shown). The received camera data may undergo a similar transformation as the user input events to adjust the camera data to the display properties (e.g., display size, resolution) of the remote display unit 290. Merging the camera data with the overlay representations means that, for example, the fingertips of the user's hand are displayed at the same position as the overlay representations of the respective user input events. When the user moves the hand in relation to the input device 170, this movement is continuously shown at the remote display 290 via the respective overlay representation 320 of the camera data. That is, even when no user input event is generated at the input device 170 the user can continuously control the hand movement using the visual feedback of the remote display unit 290. This allows the user for example to move the overlay representation 320 of the hand in a controlled manner towards the star 330 on the remote display while the real movement of the user's hand occurs relative to the input device 170.

The interaction context with the information about the video to be shared with the other users may also result in a respective overlay representation 321 which is merged together with the already existing overlay representations 320 in the remote computer. For example, to indicate to the user that the interaction context currently has the information about the video which was selected on the workplace computer 100, the transformer can also transform the received data structure with the interaction context. If a thumbnail of the video frame at the time point of selection is part of this data structure, the transformer can calculate an appropriate size and position for the thumbnail and merge it with the existing overlay representations. For example, the thumb nail 321 can be placed in the proximity of the hand overlay representation 320 where it is moved synchronously with the hand overlay representation. This indicates to the user that there is an interaction context available, which can be used in combination with the map application running on the remote computer 200. The user may now move the hand 1 relative to the input device 170 until the respective overlay representation 320 comes close to the star 330 - that is, the location of the incident to which the video of the interaction context relates. The star 330 may be a clickable object in the map application of the second computer. The user can then click on the star 330 by touching the input device 170 with the index finger (or by releasing the finger) as soon as the overlay representation 320 of the user's index finger is in direct contact with the star 330. The map application can be configured in a way that the interaction context is now incorporated in response to the recognized transformed user input event (click event). The interaction context including the link to the video source server may be inserted into the city map in close proximity to the star 330. The map application can then be configured to run the video 340 in the city map so that every other user can now benefit from the surveillance camera data which is recorded in the proximity of the robbed bank. Therefore, immediately every user becomes aware of the suspicious car discovered by the user 1 of the workplace computer 100.

Once the interaction context has been inserted into the respective application on the remote computer 200, the respective overlay representation 321 of the interaction context is deleted from the overlay video memory of the remote computer. Therefore the user receives immediate feedback that the insertion of the interaction context was successful. The user may then use the input device 170 to adjust the size or the zoom factor of the video on the remote display unit by generating corresponding user input events on the input device 170 while still staring at the inserted video on the remote display.

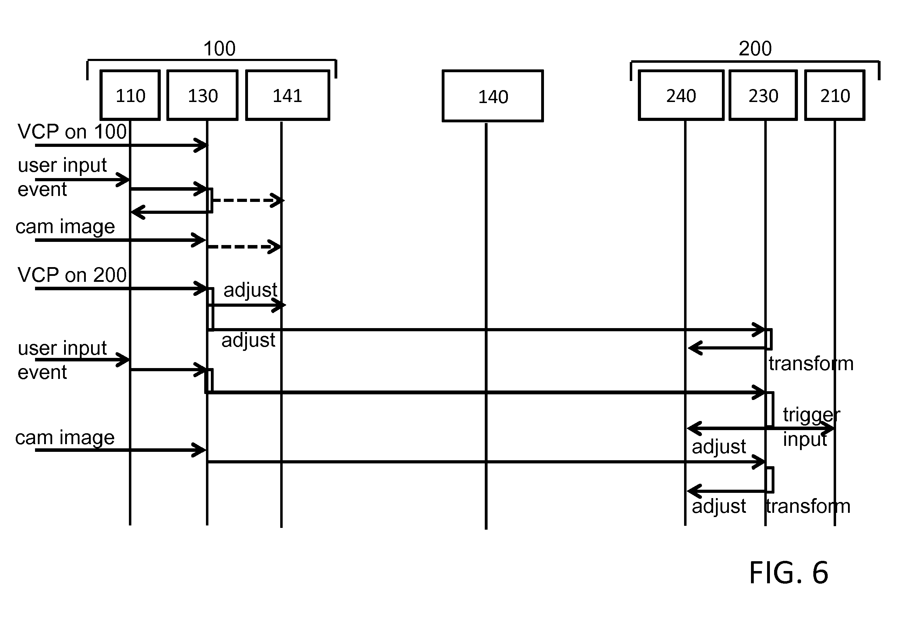

FIG. 6 is a sequence diagram illustrating switching from normal operation mode to input redirection mode according to an embodiment of the invention. Each vertical line corresponds to a component of the decentralized computer system as shown in FIG. 1 (cf., system 1000). The same reference numbers as in FIGs. 1, 2 are used for the respective components. The horizontal arrows indicate interactions between different processes performed on individual components of the computer system. In the example, in the beginning the user's VCP may be directed towards the display unit 195 of the user's workplace computer 100 or towards the user input device 170 which may be a horizontal touchscreen. The VCP is recognized by the VCPD and the input redirection component 130 stays inactive to the extent that input events are re-inserted into the event queue of the workplace computer 100 (cf. FIG. 2, local display embodiment description). Any user input event from the input device of computer 100 is captured by the operating system 110 and intercepted (extracted) by the redirection component 130. This is indicated by the arrow from 110 to 130. In the redirection component the VCP, more specifically the result received from the VCPD, is evaluated which is indicated by the process bar represented by a short vertical line in parallel to the line of component 130. Since the VCP is on the local display unit, user input events can be directly re-inserted into the event queue of computer 100 and are processed further by the operating system 110. For reasons of simplicity it is assumed in the context of this example, that the redirection component 130 and the transformer 230 in FIG. 2 can be seen as one functional unit. Therefore, only one line 130 is used in FIG. 6 to illustrate the respective combined functions. This re-insertion and the handover of control to the operating system 110 are indicated by the arrow between 130 and 110. The re-inserted input events may be represented by a corresponding overlay 141 representation on the local display unit. The update of the local overlay is triggered by the redirection/transformer component, which is illustrated by the dotted arrow from 130 to 141.

Further, additional overlay information extracted from the camera image can be displayed. For example, while interacting with a touch-screen the hands of the user may be captured by a camera. Parts of the camera image or any information which can be extracted from the image (e.g., position of fingertips) can be displayed as a transparent overlay 141 on the local display unit to enhance visual feedback provided by the operating system 110 based on the touch-input. This is achieved by merging the overlay representations of the user input events with the overlay representation of the camera data. The trigger of an update of the overlay on the workplace computer 100 with information extracted from the camera image is illustrated by the dotted arrow between 130 and 141.

Then, the user's VCP changes towards a remote display of the remote computer 200. This event is recognized by the VCPD and handled by the input redirection component 130. It may trigger an adjustment of the overlays on both displays, the local display of workplace computer 100 and the remote display of remote computer 200. For example, on the local display a grey semi-transparent overlay could be displayed in order to visually indicate that the local display became inactive because the workplace computer 100 has switched into input redirection mode because of the VCP change. On the remote display of computer 200, for example, a transformed version the current status of user input events, such as a mouse position or touch points, can be merged into the overlay 240 and can then be displayed accordingly on the remote display unit. This distributed process triggered by the switch of the VCP from computer 100 to computer 200 is illustrated by arrows between 130 and 141 as well as from 130 to 230 and from 230 to 240.

The transformer 230 of the remote computer 200 will now receive the redirected input data from the workplace computer 100 (e.g., touch, mouse, keyboard) together with information about the interaction context 140 and further relevant information to perform the transformation (e.g., properties of respective reference system (reference system is used herein in the mathematical sense) of inputs received from workplace computer 100 such as the coordinate system of a touchscreen, VCP, camera image or extracted information) of the user input events at the remote computer 200. This information relevant for the transformation is forwarded by the redirection component of computer 100 as illustrated by respective arrows.

According to various parameters (e.g., distance of user from display, angle of observation, target display properties) the user input events received by the transformer 230 on the remote computer 200 are transformed, user input events are generated and inserted into the event queue of the operating system 210 on the remote computer 200 (see arrow from 230 to 210). An overlay 240 on the remote computer is adjusted accordingly (e.g., transformed user input events, transformed image of the hand captured from the camera images). This adjustment is indicated by an arrow from 230 to 240 after the transformation process is finished on computer 200.

The camera image or extracted information similarly is forwarded to the remote computer 200, is transformed according to various parameters (e.g., distance of user from display, angle of observation, target display properties) and finally is displayed appropriately via the overlay 240.

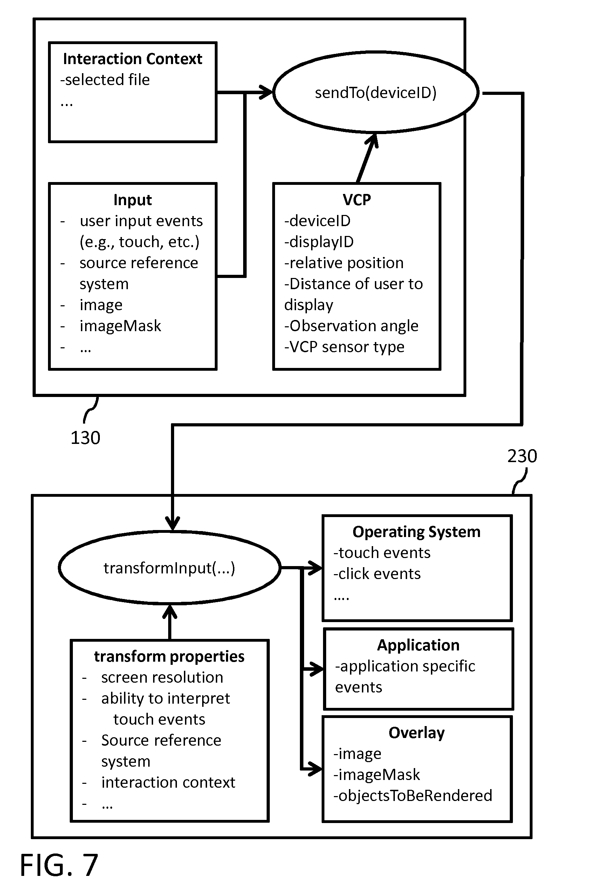

FIG.7 is a process chart with examples of information transfer from the source computer 100 to the remote computer 200 when redirection is activated. Further, it illustrates how this information is further processed by the transformer 230 in computer 200 (cf. FIG. 1). As soon as a switch of the VCP from the local computer to the remote computer is detected by the VCPD all relevant information can be collected by the redirection component 130 to be sent to the remote computer.

The VCPD determines the target display (displayID) and the corresponding device the target display is connected to (deviceID). For example, the deviceID can be the IP address of the remote computer and displayID the number of the display on the remote computer the VCP is directed towards. Depending on the accuracy of the VCPS also the relative position of the VCP on the target display can be determined. Additionally, depending on the information available about the spatial arrangement of the display environment additional information about distance of the user to the display and the observation angle may be available. This information may be sent by the redirection component together with information about the user input event and the interaction context in the sendTo-process shown in FIG. 7 to the remote device identified by the deviceID.

Information about user input events can include the user input event extracted from the event queue (e.g., touch, mouse movement), the reference system of the input devices (e.g., coordinate system of the touchscreen) and camera data or extracted information.

The interaction context may contain information about icons selected or applications running on the local computer as well as further application specific data.

After all this information is sent to computer 200 and received by the transformer, the transformInput process is started taking it as input in addition to transform properties acquired from the configuration of the remote computer 200. For example, display properties of the remote display are used together with information about the reference system of input events to transform them appropriately. As output of this process transformed events are inserted into the event queue of the operating system or, if, for example, input type is not supported by the operating system application specific events may be generated and passed to the target application. Additionally, the overlay on the remote system is updated with appropriate representations of the input event and camera data.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer implemented method (4000) for input redirection in a decentralized computer system infrastructure, comprising:
receiving (4100), at a first computer, measurement data (181) from a visual concentration point sensor (180), wherein the measurement data (181) indicates a visual concentration point (290-1, 330) of a user (1) of the first computer (100);
receiving (4200) a user input event from an input device (170) of the first computer (100), wherein the user input event is inserted into an event queue of the first computer;
while the visual concentration point (290-1, 330) is located on a display unit (290) of a remote second computer (200), redirecting (4300) the user input event to the second computer (200);
transforming (4400) the user input event in compliance with properties of the display unit (290) of the second computer;
inserting (4500) the transformed user input event into an event queue (211) of the second computer (200); and
displaying (4600) an overlay representation (320) of the transformed user input event on the display unit of the second computer.

2. The computer implemented method of claim 1 further comprising:
receiving, at the first computer, data (100) from a camera (190), wherein the camera data is associated with the user input event;
while the visual concentration point (290-1, 330) is located on the display unit (290) of the remote second computer, transmitting the camera data to the second computer (200); and
merging the camera data with the overlay representation (320) on the display unit (290).

3. The computer implemented method of anyone of the previous claims, further comprising:
identifying an interaction context at the first computer, wherein the interaction context is associated with the user input event;
while the visual concentration point is located on the display unit, redirecting the interaction context to the second computer (200); and
using the interaction context for transforming (4400) the user input event.

4. The computer implemented method of claim 3, further comprising:
associating the interaction context (321) with the overlay representation (320) of the transformed user input event.

5. The computer implemented method of claim 3 or 4, wherein the interaction context is associated with an application running on the second computer.

6. The computer implemented method of anyone of the previous claims, wherein the user input event is received from a multi-touch input device.

7. The computer implemented method of anyone of the previous claims, wherein the interaction context comprises the distance of the user from the display unit and/or the angle of observation.

8. The computer implemented method of anyone of the previous claims, wherein redirecting (4300) comprises:
extracting the user input event from the event queue of the first computer;
adjusting the extracted user input event based on parameters determined by the VCPD on the basis of the measurement data (181) from at least one visual concentration point sensor (180); and
transmitting the adjusted user input event to the second computer (200).

9. The computer implemented method of anyone of the previous claims, further comprising:
while the visual concentration point is located on a local display unit (195) of the first computer (100), reinserting (4260) the user input event into the event queue of the first computer.

10. A decentralized computer system (1000) comprising:
a first computer (100) having:
an operating system (110) having an event queue (111), wherein the event queue (111) is configured to receive user input events from at least one input device (170);
a visual concentration point detector (120) configured to receive measurement data (181) from a visual concentration point sensor (180), and to detect, based on the measurement data (181), a visual concentration point of a user (1) of the at least one input device (170);
a redirection component (130) configured to redirect the user input events to a remote second computer (200), while the visual concentration point is located on a display unit (290) of the second computer (200);
the second computer (200) having:
an interface component (220) configured to receive the user input events from the first computer (100);
a transformer component (230) configured to transform the user input events in compliance with properties of the display unit (290) of the second computer (200);
a further operating system (210) having a further event queue (211), wherein the further event queue (211) is configured to insert the transformed user input events; and
the display unit (290) being configured to display an overlay representation (240) of the transformed user input event.

11. A computer system (2000) comprising:
an operating system (110) having an event queue (111), wherein the event queue (111) is configured to receive user input events from at least one input device (170);
a visual concentration point detector (120) configured to receive measurement data (181) from a visual concentration point sensor (180), and to detect, based on the measurement data (181), a visual concentration point of a user (1) of the at least one input device (170);
a redirection component (130) configured to redirect the user input events to a remote second computer, while the visual concentration point is located on a remote display unit of the second computer;
an interface component (220) configured to forward the redirected user input event to the remote second computer; the interface component (220) being further configured to receive a further user input event from a further remote computer;
a transformer component (230) configured to transform the further user input event in compliance with properties of a display unit (195) of the computer system (2000) and configured to insert the transformed further user input event into the event queue (111); and
the display unit (195) being configured to display an overlay representation of the transformed further user input event.

12. The computer system (2000) of claim 11, wherein
the redirection component (130) and transformer (230) are further configured to reinsert the user input event into the event queue (111) while the visual concentration point is located on the display unit (195) of the first computer (100).

13. A computer program product having instructions that, when loaded into a memory of a computer (100) and executed by at least one processor of the first computer (100), execute a method for input redirection in a decentralized computer system infrastructure, the computer program product comprising:
a visual concentration point detector (120) having instructions configured to receive measurement data (181) from a visual concentration point sensor (180), and to detect,
based on the measurement data (181), a visual concentration point of a user (1) of an input device (170) of the computer (100);
a redirection component (130) having:
a first set of instructions configured to extract user input events from an event queue of an operating system of the first computer, wherein the user input events originate from the input device (170);
a second set of instructions configured to redirect the user input events to a remote target computer (200), if the visual concentration point is located on a remote display unit (290) of the target computer (200); and
a third set of instructions configured to forward the user input events to a transformer (230), if the visual concentration point is located on a local display unit (195) of the computer (100);
the transformer (230) having instructions to transform the user input events in compliance with properties of the local display unit (195) and to reinsert the transformed user input events into the event queue; and
an overlay merge component having instructions configured to merge overlay representations of the transformed user input events into an overlay memory portion of the computer (100).

14. The computer program product of claim 13, wherein
the transformer (230) having further instructions configured to transform user input events of a remote source computer in compliance with properties of the local display unit (195) and to insert the transformed user input events into the event queue.

15. The computer program product of claim 14, wherein
the overlay merge component having further instructions configured to merge overlay representations of data (100) from a camera (190) into the overlay memory portion:
if the visual concentration point is located on a remote display unit of the remote source computer, the camera data originating from the remote source computer and being associated with a respective user input event of the remote source computer;
if the visual concentration point is located on the local display unit (195) of the computer (100), the camera data originating from the computer (100) and being associated with a respective user input originating from the input device (170).
